# EUROPEAN PATENT SPECIFICATION

(11) **EP 0 996 233 B1**
(45) Date of publication and mention of the grant of the patent: **16.03.2011**
(21) Application number: 99402574.0
(22) Date of filing: 19.10.1999
(51) Int. Cl.: H04B 1/20, H02J 3/14, G08C 23/04, H03J 1/00, H04B 1/16

(54) **Apparatus and method for controlling power saving mode in a power supply**
Verfahren und Vorrichtung zur Stromsparung eines Speisegeräts
Procedé et dispositif d'économie d'énergie pour un appareil d'alimentation

(30) Priority: 22.10.1998 KR 9844768
(43) Date of publication of application: 26.04.2000
(73) Proprietor: LG ELECTRONICS INC., Youngdungpo-gu Seoul (KR)
(72) Inventor: Lee, Dong Ju, Pyungtaek, Kyungki-Do (KR); Pyeon, Dae Beum, Suwon, Kyungki-Do (KR)
(74) Representative: Heunemann, Dieter

(56) References cited:
- EP-A- 0 436 515
- EP-A- 0 726 687
- EP-A- 0 776 128
- GB-A- 2 267 167
- US-A- 5 729 667

## Description

### BACKGROUND OF THE INVENTION

### 1. Field of the Invention

The present invention relates to an apparatus and method for controlling power saving mode of a power supply, and more particularly to an apparatus and method for controlling power saving mode that cancels a power saving mode by detecting a low frequency remote controller key input signal externally applied in a power saving mode of the power supply and operates a microcomputer by high frequency clock signal.

### 2. Description of the Conventional Art

A conventional apparatus for controlling a power saving mode of a power supply is automatically switched to a power saving mode to minimize the power consumption of a power supply when a power saving mode key input signal is externally applied or a predetermine time has elapsed in a condition where alternating current(AC) power is supplied but the loads do not consume the AC power. Also, when the power supply is in the saving mode, a backup capacitor of a backup unit provide power to a key input signal input unit and a micro computer of the power saving mode controlling apparatus to detect the power supply operation key input signal.

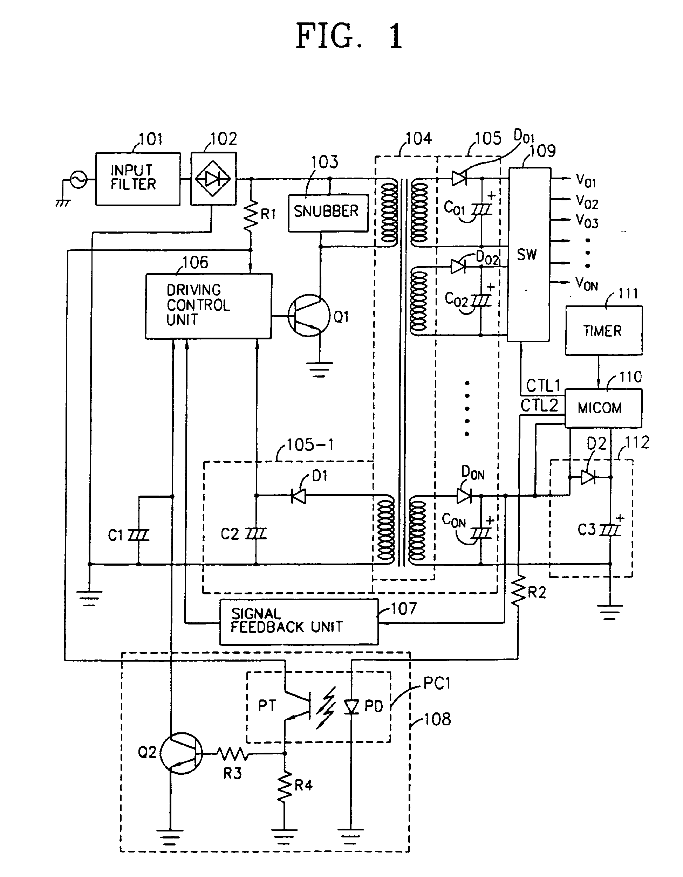

Figure 1 is a schematic block diagram illustrating a conventional switching mode power supply (SMPS) which comprises a power supply circuit unit and a controlling unit.

As shown therein, the power supply circuit unit includes an input filter unit 101 receiving AC power from AC power source and reducing noises included in AC power, a rectifying and smoothing unit 102 rectifying and smoothing the noise free AC power, a switching device Q1 receiving a predetermined control signal from signal feedback units 107 and 108 and switching on/off a transformer 104 which is to be later described, a snubber 103 eliminating switching noises which are generated in accordance with the switching on/off operation of the switching device Q1, a transformer 104 receiving DC (direct current) power outputted from the rectifying and smoothing unit 102 transforming an energy from a primary terminal to secondary terminals of the transformer 104 in accordance with an on/off operation of the switching device Q1, for thereby inducing a plurality of AC voltages, a rectifying and smoothing unit 105 inputting the AC voltages which are induced at the secondary terminals of the transformer 104 and rectifying and smoothing and outputting a plurality of DC voltages, a switching unit 109 receiving the DC voltages and outputting DC voltages Vo1, Vo2,..., VoN to loads (not shown) in accordance with the control of a microcomputer, a rectifying and smoothing unit 105-1 inputting AC power which generated from an auxiliary terminal of the transformer 104 and outputting a DC voltage, and a driving control unit 106 receiving the DC voltage outputted from the rectifying and smoothing unit 105-1 and control signals outputted from a control unit which will be later described and controlling the switching on/off operation of the switching device Q1.

Further, the control unit of the conventional SMPS includes a microcomputer 110 controlling a whole system, a timer 111 generating and outputting a timing signal to the microcomputer 110, a backup unit 112 being charged by receiving one of the DC voltages outputted from the rectifying and smoothing unit 105 and supplying power to the microcomputer 110 in the power saving mode, a signal feedback unit 107 providing DC power to the driving control unit 106, and a signal feedback unit 108 controlling an operation of the driving control unit 106 in accordance with a control signal outputted from the microcomputer 110 in the power saving mode. Wherein the signal feedback units 107, 108 respectively are constituted of a photocoupler PC1 and a switching device Q2 such as a transistor and resistors R3, R4.

The operation of the conventional SMPS will be described in detail with the accompanying drawings.

When it is in a normal mode where the loads consume power and AC power is inputted to the input filter unit 101 from AC source power, the input filter unit 101 eliminates the noises included in AC power and outputs the noise free AC power to the rectifying and smoothing unit 102. Then, the rectifying and smoothing unit 102 rectifies and smoothes the noise free AC power supply and outputs a DC voltage having a predetermined level to a primary terminal of the transformer 104 and to the driving control unit 106.

Here, as the driving control unit 106 switches on/off the switching device Q1, a plurality of AC voltages are induced to the secondary terminals of the transformer 104 and then the rectifying and smoothing unit 105 receives, rectifies and smoothes the induced AC voltages, thereby outputting DC voltages to the switching unit 109 which outputs the DC voltages Vo1, Vo2,..., VoN to the loads (not shown).

In the above-described normal mode, the microcomputer 110 which receives one of the DC voltages outputted from the rectifying and smoothing unit 105, controls the switching unit 109 so that it provides a matching power to the loads. Also, the backup unit 112 receives the DC power and charges an electric charge to a backup capacitor C3 for providing the charged power to the microcomputer 110 in the power saving mode.

When the power supply is in the normal mode in which the loads consumes the power and a user inputs a power saving mode key input signal or a predetermined time has elapsed, the microcomputer 110 outputs a control signal having a predetermined duty to a phtodiode PD of the photocoupler PC1 in the signal feedback unit 108 through the resistor R2. Then, when the photodiode PD and the phototransistor PT are operated, the switching device Q2 outputs a control signal to the driving control unit 106 and accordingly the driving control unit 106 is controlled. Here, when the signal feedback unit 108 is switched on, the driving control unit 106 receives a ground level signal, thereby stopping the switching on/off operation of the switching device Q1 and thus stopping the operation of the transformer 104. Accordingly, the SMPS is entered into a power saving mode.

When the transformer 104 is stopped and no voltages are induced to the secondary terminals of the transformer 104, that is the SMPS is in the power saving mode, the backup unit 112 supplies a backup power to the microcomputer 110. Accordingly, the microcomputer 110 is operated by a low frequency clock signal such as 32kHz during the time when the transformer 104 does not operated.

When the power supply is in the power saving mode under the above-mentioned conditions, if a power supply operation key input signal is inputted to the power supply, the power supply immediately supplies the power to the loads.

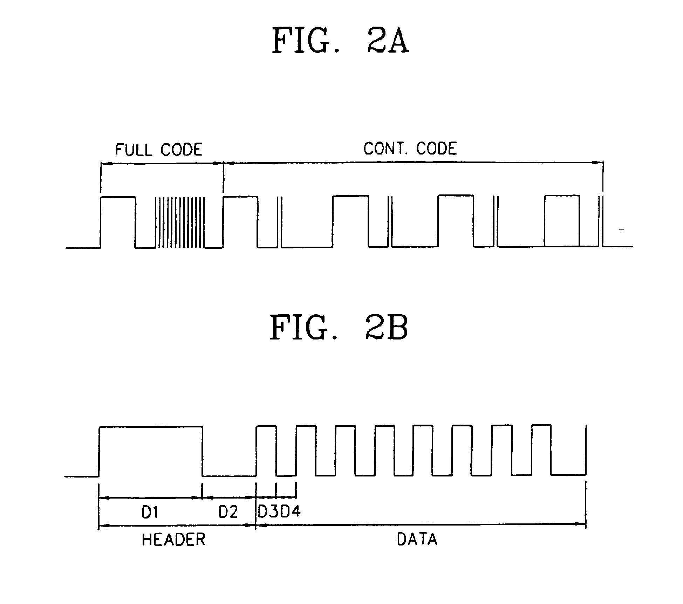

Here, the power supply operation key input signal is analyzed as shown in Figure 2A and 2B. Particularly, Figure 2A illustrates the power supply remote controller key input signal supplied from the conventional SMPS, Figure 2A showing a full code consisting of a header and data and a consecutive code indicating that a remote controller (R/C) key is continuously pressed. Figure 2B illustrates the full code of Figure 2A in detail, wherein a header part is a low frequency signal having a high level D1 and a low level D2 in 9.5ms and a data part is a high frequency signal having a high level D3 and a low level D4 in 0.56ms.

However, since the conventional SMPS, which receives the power supply R/C key input signal as shown in Figure 2, must drive the microcomputer 110 using a high frequency clock signal (14MHz) at a high speed to detect the R/C key input signal of the high frequency, the microcomputer 110 consumes considerably large power. Also, even though driving the microcomputer 110 using a low frequency clock signal (32KHz), since the R/C key input signal is inputted as a high frequency, the microcomputer 110 can not detect the R/C key input signal. Accordingly, the user has to manually press a power saving mode canceling key or power supply key so that the SMPS provide power to the loads.

EP 0 436 515 A2 discloses a remotely controlled power supply apparatus which is able to switch between a normal mode and a standby mode in accordance with an incoming remote control signal.

US 5606313 discloses a low power addressable data communication device comprising a power manager which energizes a de-energized controller in case it receives a signal encoding a wake-up section.

Accordingly, the present invention is directed to an apparatus for controlling a power saving mode in a power supply and a method thereof which obviate the problems and disadvantages in the conventional art.

An object of the present invention is to provide an apparatus for controlling a power saving mode in a power supply which converts a power saving mode of the power supply into a normal mode by a remote controller key input signal.

Another object of the present invention is to provide an apparatus for controlling a power saving mode in a power supply which detects a low frequency remote controller key input signal, cancels a power saving mode of the power supply and provide power to the loads.

Another object of the present invention is to provide an apparatus for controlling a power saving mode in a power supply which minimizes power consumption during a power saving mode of the power supply, detects a low frequency remote controller key input signal, cancels a power saving mode of the power supply and provide power to the loads.

Another object of the present invention is to provide an apparatus for controlling a power saving mode in a power supply which minimizes power consumption during a power saving mode of the power supply, detects a low frequency remote controller key input signal and operates a microcomputer with a high frequency clock signals.

An object of the present invention is to provide a method for controlling a power saving mode in a power supply which converts a power saving mode of the power supply into a normal mode by a remote controller key input signal.

Another object of the present invention is to provide a method for controlling a power saving mode in a power supply which minimizes power consumption during a power saving mode of the power supply, detects a low frequency remote controller key input signal, cancels a power saving mode of the power supply and provide power to the loads.

Another object of the present invention is to provide a method for controlling a power saving mode in a power supply which minimizes power consumption during a power saving mode of the power supply, detects a low frequency remote controller key input signal and operates a microcomputer with a high frequency clock signals.

These objects are achieved with the features of the claims.

The accompanying drawings, which are included to provide a further understanding of the invention and are incorporated in and constitute a part of this specification, illustrate embodiments of the invention and together with the description serve to explain the principles of the invention. In the drawings:
Figure 1 is a schematic block diagram illustrating a conventional switched mode power supply (SMPS);
Figures 2A and 2B are diagrams illustrating a conventional remote controller (R/C) key input signal;
Figure 3 is a schematic diagram illustrating a power saving mode controlling apparatus according to a first embodiment of the present invention;
Figure 4 is a diagram illustrating an R/C key input signal according to the embodiment of the present invention;
Figure 5 is a flowchart illustrating a power saving mode controlling method according to a second embodiment of the present invention;
Figure 6 is a diagram illustrating an R/C key input signal according to the embodiment of the present invention; and
Figure 7 is a flowchart illustrating a power saving mode controlling method according to a third embodiment of the present invention.

### DETAILED DESCRIPTION OF THE INVENTION

Reference will now be made in detail to the preferred embodiments of the present invention, examples of which are illustrated in the accompanying drawings.

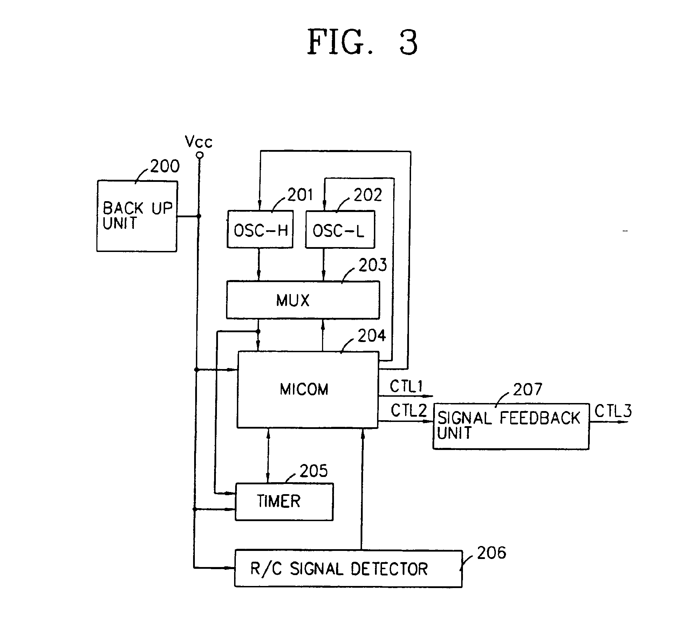

Figure 3 is a schematic diagram illustrating a power saving mode controlling apparatus according to a first embodiment of the present invention.

Here, a power supply circuit unit of the power saving mode controlling apparatus according to the present invention is the same as in the conventional art. As shown therein, the power saving mode controlling apparatus according to the present invention includes a backup unit 200 being charged in a normal mode and providing charged power to each circuit block in a power saving mode, a microcomputer 204 outputting in the normal mode a control signal CTL1 which controls a switch unit (not shown), in a power saving mode receiving DC power from the backup unit 200 and outputting a control signal CTL2 to a signal feedback unit 207 which is to be later described, a high frequency clock signal oscillator OSC-H 201 generating a high frequency signal CLK1, for example, of 14MHz, in accordance with the control of the microcomputer 204, a low frequency clock signal oscillator OSC-L 202 outputting a low frequency clock signal, for example, of 32kHz, in accordance with the control of the microcomputer 204, a multiplexer 203 receiving the high and low frequency clock signals and selectively outputting the high or low frequency clock signals to the microcomputer 204 and a timer 205 in accordance with the control of the microcomputer 204, the timer 205 generating a predetermined timing signal receiving the power from the backup unit 112 or the rectifying and smoothing unit 105 and providing the high or low frequency clock signal to the microcomputer 204, and an R/C signal receiving unit 206 receiving the power from the backup unit 112 in the power saving mode or the rectifying and smoothing unit 105 in the normal mode and receiving an externally applied R/C key input signal, thereby outputting the R/C key input signal to the microcomputer 204.

As the conventional SMPS, the power saving mode controlling apparatus according to the embodiment of the present invention is switched from the normal mode to the power saving mode if the power saving mode key input signal is externally supplied or a predetermined time has elapsed without receiving the power saving mode key input signal when the loads do not consume.

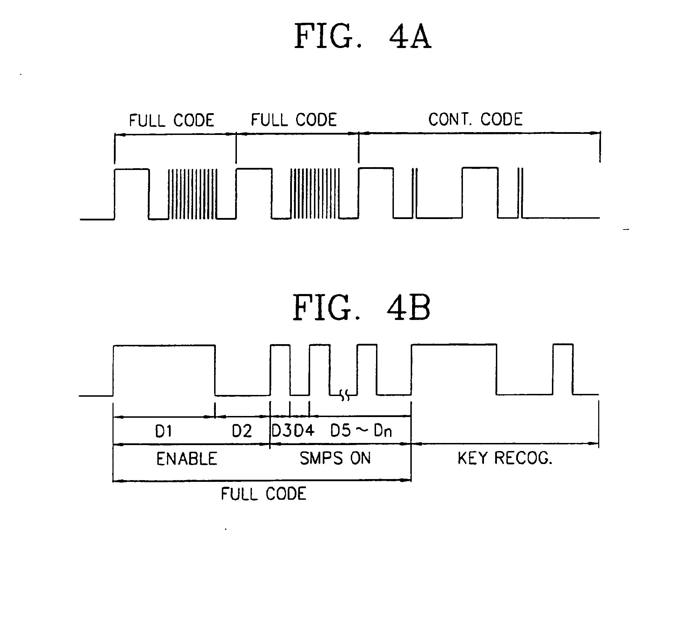

When the power supply is in the power saving mode, the power saving mode controlling apparatus operates in response to the R/C key input signal, as shown in Figures 4A and 4B and provide power to the loads. Here, the R/C key input signal shown in Figures 4A and 4B will be described in detail.

Figure 4A is a diagram illustrating the R/C key input signal which drives the power saving mode controlling apparatus wherein there are constituted of a couple of full codes and a continuous code indicating that the R/C key is continuously pressed. Figure 4B illustrates one of the full codes of Figure 4A in more detail in which the full code consists of a low frequency header having a high level pulse width D1 of 9.5ms and a low level pulse width D2 of 4.5ms and high frequency data having pulse widths D3, D4,..., Dn each low and high level pulse widths of which are 0.56ms.

Here, the header is a part enabling the microcomputer 204. When the microcomputer 204 is enabled by detecting the header, the microcomputer 204 analyzes the data next to the header and output a control signal corresponding to the data, such as an instruction converting a power saving mode into a normal mode. Also, the continuous code, which is a key input signal indicating that the R/C key is continuously pressed, consists of a low frequency header having predetermined pulse widths (full code D1 and D2).

Now, an operation of the power saving mode controlling apparatus in the power saving mode according to the present invention will be described with the R/C key input signal.

When the power supply is in the normal mode and the loads do not consume power, if the user inputs the power saving key input signal or the predetermined time has elapsed without inputting of the power saving mode key input signal, the microcomputer 204 converts the normal mode of the power supply into the power saving mode so that the power supply does not provide power to loads.

As described above, when the power supply enters the power saving mode in which the power supply no longer provides the power to the loads, the backup unit 200 being charged in the normal mode provides power to the R/C signal receiving unit 206 detecting the externally applied R/C key input signal, the microcomputer 204 receiving a signal from the R/C signal receiving unit 206 and the timer 205 supplying a timing signal to the microcomputer 204.

Here, it is to be noted that the microcomputer 204 operates in a sleeping mode. In the sleeping mode, the microcomputer 204 operates at a low speed in accordance with the low frequency clock signal, for example, of 32kHz (32768Hz), supplied from the low frequency clock signal oscillator 202, and requires considerably low power than the microcomputer 204 operating at a high speed.

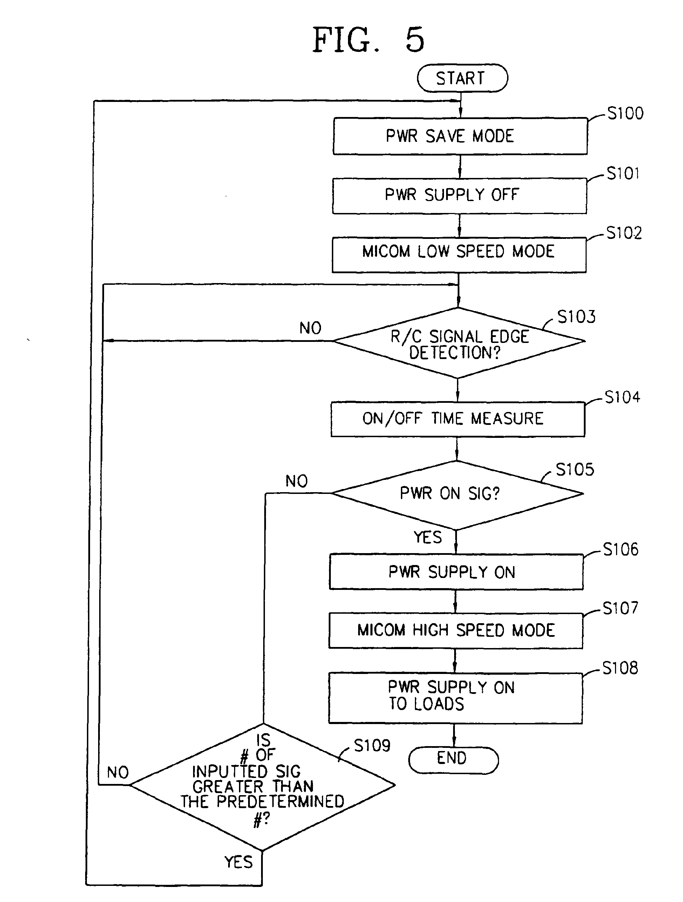

Figure 5 is a flowchart that illustrates a method of controlling a power saving mode according to a second embodiment of the present invention.

As shown therein, when the power supply is in the power saving mode (S100), a transformer of the power supply is not operated (S101) and thus the microcomputer 204 operates at the low speed in the sleeping mode in accordance with the low frequency clock signal CLK1 of about 32kHz, which is outputted from the low frequency clock signal oscillator 202 (S102).

When the R/C key input signal is supplied, as shown in Figures 4A and 4B, the R/C signal receiving unit 206 detects the R/C key input signal and supplies to the microcomputer 204 which detects edges of the low frequency header (D1, D2) of the full code therefrom (S103), measures each of high and low level pulse widths at the detected edges (S104) and thereby determines whether the measured pulse widths are the predetermined power key input signal of which pulse widths are 9.5ms (D1) and 4.5ms (D2), respectively (S105).

In accordance with the result of determination step S105, if the power key input signal is a power supply operation command signal, the microcomputer 204 is enabled and thus switches on the power supply (S106). At the same time, the microcomputer 204 receives the high frequency clock signal of about 14MHz from the high frequency oscillator 201 and thus operates at the high speed (S107). Further, the microcomputer detects data which are the high frequency of the full code from the R/C key input signal, thereby switching the power saving mode to the normal mode, thereby driving the power supply to provide the power for the loads (S108).

While in accordance with the result of the determination step S105, if the inputted R/C key input signal is not the power supply operation signal but other key signal, the microcomputer 204 counts the number of the inputted key input signals and determines whether the number is greater than a predetermined number (S109) during a predetermined time. If the counted number of the inputted key input signals is greater than the predetermined, the microcomputer 204 make the power supply maintained in the power saving mode and is operated at a low speed by inputting a low frequency of 32kHz outputted from the low frequency oscillator 202. Otherwise if the counted number is less than the predetermined number, the microcomputer 204 detects the edge of the inputted R/C key input signal S103.

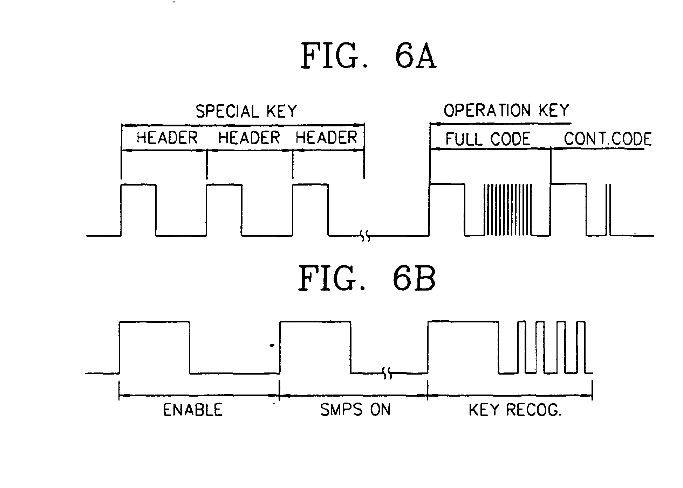

An operation of the power saving mode controlling apparatus according to the embodiment of the present invention in the power saving mode will be described with the R/C key input signal as shown in Figures 6A and 6B. Here, Figure 6A illustrates a R/C key input signal which controls the power saving mode controlling apparatus according to the embodiment of the present invention, the R/C key input signal consisting of a special key part including three headers and an operation key including a full code and a continuous code. Figure 6B detailedly illustrates one of the headers and the full code shown in Figure 6A.

When the power supply is in the power saving mode and the user inputs the R/C key input signal as shown in Figure 6A, the microcomputer 204 operating in the sleeping mode detects the special key signal consisting of headers of long intervals so that the power supply is switched to the normal mode from the power saving mode.

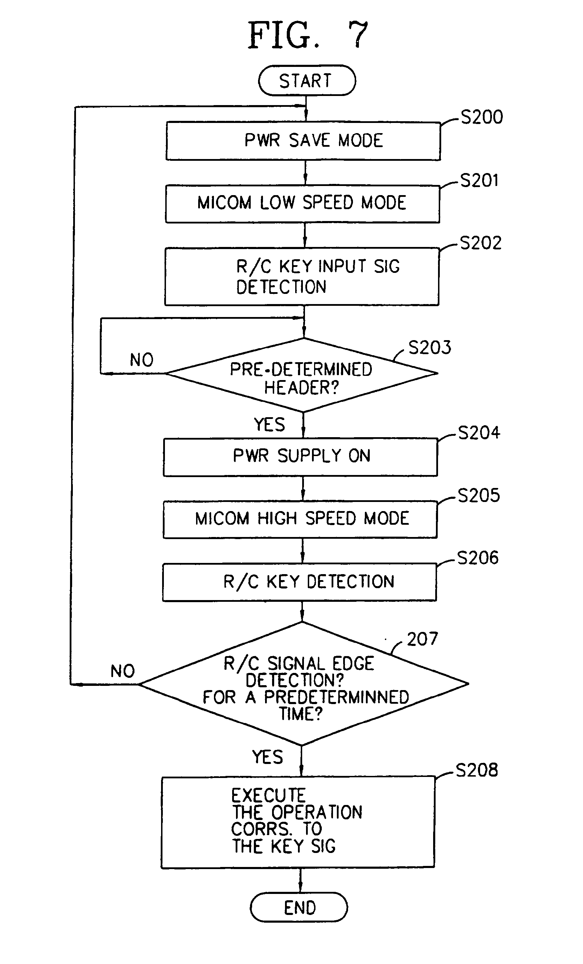

Figure 7 is a flowchart illustrating a method for controlling a power saving mode according to a third embodiment of the present invention.

When the power supply is in the power saving mode (S200), the transformer of the power supply is stopped and thus the microcomputer 204 becomes the sleeping mode in which the microcomputer 204 operates at the low speed in accordance with the low frequency signal of about 32kHz which is outputted from the low frequency clock signal oscillator 202 (S201).

Here, when the R/C key input signal is applied, as shown in Figures 6A and 6B, the R/C signal receiving unit 206 detects and outputs the R/C key input signal to the microcomputer 204. Further, the microcomputer 204 detects the low frequency headers in the special key of the received signal and determines whether the headers are low frequency headers which are previously determined (S203).

Here, if the detected headers are the low frequency headers constituting the special key, the microcomputer 204 is switched to the normal mode of the power supply from the power saving mode (S204). At the same time, the microcomputer 204 operates at the high speed in accordance with the high frequency clock signal of 14MHz supplied from the high frequency clock signal oscillator 201 (S205), and detects the operation key of the continuously applied R/C key input signal (S206).

If the microcomputer 204 does not detect that another R/C key input signal is inputted during a predetermined time, the microcomputer 204 switches the normal mode of the power supply to the power saving mode (S207), while if detects, the microcomputer 204 performs an operation corresponding to the another R/C key input signal (S208).

Accordingly, the second embodiment of the present invention relates to a power saving control method using a R/C key input signal consisting of a special key and operation key and operating the power supply when the microcomputer 204 operates at a low speed in the power saving mode. That is, if the microcomputer 204 is driven by the low frequency clock signal of 32kHz and four cycles are used to carry out an instruction, it takes about 308 s to perform the single instruction. If about ten instructions are processed to detect a single signal, it takes about 3.08ms to detect the signal and eventually it is impossible to detect any high frequency data (D3, D4, ..., Dn of 0.56ms) included in the R/C key input signal. Thus, the R/C key input signal including the special key is used for the second embodiment of the present invention.

Also, the third embodiment of the present invention relates to a power saving control method in which the microcomputer 204 can detect an R/C key input signal at a low frequency clock signals rather than at a high frequency clock signal of 14MHz. That is, if using a low frequency clock which is lower than the high frequency clock signal of 14MHz, for example, a low frequency operation clock of 260kHz, it takes 0.154ms to receive a single signal instead of 3.08ms taken, so that the microcomputer 204 can detect the high frequency data (D3, D4,..., Dn) contained in the R/C key input signal.

Accordingly, when the R/C key input signal is inputted, the data of thereof can be detected without canceling the power saving mode by the microcomputer, which does not requires a separate special key. Here, it is noted that the low frequency clock of 260kHz has been taken as an example, and if a low frequency clock signal which has higher frequency than 260kHz, for example, 300kHz is employed for the present invention, the same effect will be obtained.

As described above, the apparatus and method for controlling the power saving mode according to the present invention drive the microcomputer at the low speed by selecting the low frequency clock signals among the clock signals outputted from the high and frequency clock oscillators and cancel the power saving mode by detecting the headers having the low frequency constituting the R/C key input signal, so that the power saving mode can be switched to the normal mode of the power supply by the R/C signal, and since the microcomputer operates at the relatively low speed in the power saving mode, the power consumed by the microcomputer can be minimized.

In addition, the R/C key input signal in which there is provided the low frequency header followed by the high frequency data has been taken as the example in the above embodiments of the present invention. However, although there is provided an R/C key input signal in which the order of the header and the data of the R/C key input signal is reversed, the result thereof will be the same as the present invention.

## Claims

1. An apparatus for switching a power supply between a power saving mode and a normal mode, comprising:
low frequency clock signal generating means (202) for generating a low frequency clock signal;
high frequency clock signal generating means (201) for generating a high frequency clock signal;
signal selecting means (203) for selectively outputting said low frequency clock signal or said high frequency clock signal to a microcomputer (204);
a signal receiving unit (206) for receiving an externally applied signal and outputting said signal to said microcomputer (204); and
said microcomputer (204) for operating at a low speed or a high speed, respectively, in accordance with said low frequency clock signal or said high frequency clock signal from the signal selecting means (203),
wherein said microcomputer is adapted to switch said power supply from the power saving mode to the normal mode in accordance with said externally applied signal, and
said microcomputer is adapted to detect a header of said externally applied signal when operating at the low speed in accordance with the low frequency clock signal, and control, upon detection of the header, the signal selecting means (203) to output the high frequency clock signal.

2. The apparatus according to claim 1, further comprising a timer (205) for receiving the clock signal outputted from the signal selecting means (203) and generating and outputting a predetermined timing signal to the microcomputer (204).

3. A method for switching a power supply between a power saving mode and a normal mode using a microcomputer (204), comprising the following steps by said microcomputer:
controlling signal selecting means (203) to selectively output a low frequency clock signal or a high frequency clock signal to said microcomputer;
operating at a low speed or a high speed, respectively, in accordance with said low frequency clock signal or said high frequency clock signal;
receiving a remote controller key input signal;
switching said power supply from the power saving mode to the normal mode in accordance with said remote controller key input signal; and
detecting a header of said remote controller key input signal when operating at the low speed in accordance with the low frequency clock signal; and
controlling, upon detection of the header, the signal selecting means (203) to output the high frequency clock signal.

4. The method according to claim 3, further comprising the step of:
returning the power supply to the power saving mode if another remote controller key input signal is not inputted for a predetermined of time.

5. The method according to claim 3, further comprising the step of:
maintaining the power supply in the normal mode until another remote controller key input signal is inputted.

## Patentansprüche

1. Gerät zum Umschalten eines Netzteils zwischen einem Energiesparmodus und einem Normalmodus mit:
einer Niedrigfrequenz(NF)-Taktsignal-Erzeugungseinrichtung (202) zum Erzeugen eines Taktsignals mit niedriger Frequenz;
einer Hochfrequenz(HF)-Taktsignal-Erzeugungseinrichtung (201) zum Erzeugen eines Taktsignals mit hoher Frequenz;
einer Signalauswahleinrichtung (203) zur selektiven Ausgabe des NF-Taktsignals oder des HF-Taktsignals an einen Mikrocomputer (204);
einem Signalempfangsgerät (206) zum Empfangen eines von außen eingegebenen Signals und Ausgeben des Signals an den Mikrocomputer (204); und
dem Mikrocomputer (204) zum Betrieb bei einer niedrigen bzw. einer hohen Geschwindigkeit abhängig vom NF- bzw. HF-Taktsignal von der Signalauswahleinrichtung (203),
wobei der Mikrocomputer dazu geeignet ist, das Netzteil gemäß dem von außen eingegebenen Signal vom Energiesparmodus in den Normalmodus umzuschalten, und
wobei der Mikrocomputer dazu geeignet ist, gemäß dem NF-Taktsignal beim Betrieb mit geringer Geschwindigkeit den Kopfteil des von außen eingegebenen Signals zu erfassen und nach Erfassen des Kopfteils die Signalauswahleinrichtung (203) steuert, das HF-Taktsignal auszugeben.

2. Gerät nach Anspruch 1 mit einem Taktgeber (205) zum Empfangen des von der Signalauswahleinrichtung (203) ausgegebenen Taktsignals und Erzeugen und Ausgeben eines vorgegebenen Taktsignals an den Mikrocomputer (204).

3. Verfahren zum Umschalten eines Netzteils zwischen einem Energiesparmodus und einem Normalmodus mit Hilfe eines Mikrocomputers (204), das die folgenden vom Mikrocomputer auszuführenden Schritte aufweist:
Steuern der Signalauswahleinrichtung (203) zum selektiven Ausgeben eines NF- oder HF-Taktsignals an den Mikrocomputer;
Betrieb bei niedriger bzw. hoher Geschwindigkeit abhängig vom NF- bzw. HF-Taktsignal;
Empfangen eines Schlüsseleingangssignals einer Fernsteuereinrichtung;
Umschalten des Netzteils vom Energiesparmodus in den Normalmodus gemäß dem Schlüsseleingangssignal der Fernsteuereinrichtung; und
Erfassen eines Kopfteils des Schlüsseleingangssignals der Fernsteuereinrichtung bei Betrieb bei niedriger Geschwindigkeit gemäß dem NF-Taktsignal; und
nach Erfassen des Kopfteils Steuern der Signalauswahleinrichtung (203) zur Ausgabe des HF-Taktsignals.

4. Verfahren nach Anspruch 3 mit dem Schritt:
Rückstellen des Netzteils in den Energiesparmodus, wenn über einen vorgegebenen Zeitraum kein weiteres Schlüsseleingangssignal der Fernsteuereinrichtung eingegeben wurde.

5. Verfahren nach Anspruch 3 mit dem Schritt:
Halten des Netzteils im Normalmodus bis ein anderes Schlüsseleingangssignal der Fernsteuereinrichtung eingegeben wird.

## Revendications

1. Appareil pour commuter une alimentation électrique entre un mode de gestion d'énergie et un mode normal, comprenant :
des moyens de génération d'un signal d'horloge basse fréquence (202) pour générer un signal d'horloge basse fréquence ;
des moyens de génération d'un signal d'horloge haute fréquence (201) pour générer un signal d'horloge haute fréquence ;
des moyens de sélection de signal (203) pour transmettre de manière sélective ledit signal d'horloge basse fréquence ou ledit signal d'horloge haute fréquence à un micro-ordinateur (204) ;
une unité de réception de signal (206) pour recevoir un signal appliqué depuis l'extérieur et transmettre ledit signal audit micro-ordinateur (204) ; et
ledit micro-ordinateur (204) pour fonctionner à une basse vitesse ou à une vitesse élevée, respectivement, en fonction dudit signal d'horloge basse fréquence ou dudit signal d'horloge haute fréquence provenant dudit moyen de sélection de signal (203) ;
dans lequel ledit micro-ordinateur est adapté pour commuter ladite alimentation électrique du mode de gestion d'énergie au mode normal en fonction dudit signal appliqué depuis l'extérieur, et
ledit micro-ordinateur est adapté pour détecter un en-tête dudit signal appliqué depuis l'extérieur en cas de fonctionnement à la basse vitesse en fonction du signal d'horloge basse fréquence, et pour commander, lors de la détection de l'en-tête, les moyens de sélection de signal (203) pour transmettre le signal d'horloge haute fréquence.

2. Appareil selon la revendication 1, comprenant en outre un temporisateur (205) pour recevoir le signal d'horloge émis depuis le moyen de sélection de signal (203) et générer et transmettre un signal prédéterminé de temporisation au micro-ordinateur (204).

3. Procédé pour commuter une alimentation électrique entre un mode de gestion d'énergie et un mode normal en utilisant un micro-ordinateur (204), comprenant les étapes suivantes effectuées par ledit micro-ordinateur :
la commande de moyens de sélection de signal (203) pour transmettre de manière sélective un signal d'horloge basse fréquence ou un signal d'horloge haute fréquence audit micro-ordinateur ;
le fonctionnement à une basse vitesse ou à une vitesse élevée, respectivement, en fonction dudit signal d'horloge basse fréquence ou dudit signal d'horloge haute fréquence ;
la réception d'un signal d'entrée de touche de commande à distance ;
la commutation de ladite alimentation électrique du mode de gestion d'énergie au mode normal en fonction dudit signal d'entrée de touche de commande à distance ; et
la détection d'un en-tête dudit signal d'entrée de touche de commande à distance en cas de fonctionnement à la basse vitesse en fonction du signal d'horloge basse fréquence ; et
la commande, lors de la détection de l'en-tête, des moyens de sélection de signal (203) pour transmettre le signal d'horloge haute fréquence.

4. Procédé selon la revendication 3, comprenant en outre l'étape consistant à :
ramener l'alimentation électrique sur le mode de gestion d'énergie si un autre signal d'entrée de touche de commande à distance n'est pas entré durant une période prédéterminée de temps.

5. Procédé selon la revendication 3, comprenant en outre l'étape consistant à :
laisser l'alimentation électrique sur le mode normal jusqu'à ce qu'un autre signal d'entrée de touche de commande à distance soit entré.
